# EUROPEAN PATENT APPLICATION

(11) **EP 4 813 834 A1**
(43) Date of publication of application: **30.09.2026**
(21) Application number: 26156158.3
(22) Date of filing: 03.02.2026
(51) Int. Cl.: B64C 5/02, B64C 5/10, B64C 39/04

(54) **AIRCRAFT**

(30) Priority: 28.03.2025 DE 102025112205
(71) Applicant: Airbus Defence and Space GmbH, 82024 Taufkirchen (DE)
(72) Inventor: SENDNER, Franz-Michael, 82024 Taufkirchen (DE)
(74) Representative: Isarpatent

(57) **Abstract**

The present invention provides an aircraft (100), having a fuselage (110), a wing assembly (120), a propulsion device (130), and two tail booms (140), each comprising a stem (141) and a stabilizing surface (142), wherein the stabilizing surfaces (142) of the tail booms (140) are each arranged symmetrically with respect to the respective stem (141) of the tail boom (140), wherein the stabilizing surfaces (142) of the tail booms (140) are arranged at an angle to one another in such a way that upper edges of the stabilizing surfaces (142) have a smaller spacing than lower edges of the stabilizing surfaces (142), and wherein each of the stabilizing surfaces (142) has a tilting device (143) for controlling the aircraft (100).

## Description

The present invention relates to an aircraft.

One fundamental aim in aviation is to minimize the structural weight of an aircraft in order to enhance utility in the form of transported load or energy storage devices.

However, methods for reducing the weight of individual components may have the side effect of influencing the structural and aerodynamic stability of the aircraft. Particularly in the sector of relatively small, e.g. unmanned, aircraft, this results in a balance between weight reduction, controllability and resilience with respect to aerodynamic loads on the aircraft. Accommodating payloads can entail additional requirements in the arrangement of structural and control surfaces, which cannot be met, for example, by a typical arrangement involving just one fuselage boom and control surfaces mounted thereon. One attempt to harmonize these conflicting interests involves the use of tail booms to stabilize the aircraft.

There are also concepts that enable such booms to contribute to the control of the aircraft. However, previously known tail booms cannot control the movement around all the axes of rotation with sufficient reliability, and therefore additional control devices, e.g. ailerons mounted on the wings of the aircraft, are required. These control devices contribute significantly to the weight and complexity of the aircraft.

Given this background, it is the underlying object of the present invention to provide an aircraft of reduced structural weight without losing manoeuvrability or structural stability.

According to the invention, this object is achieved by means of an aircraft having the features of Patent Claim 1.

Accordingly, an aircraft, having a fuselage, a wing assembly, a propulsion device, and two tail booms, each comprising a stem and a stabilizing surface, is provided. The stabilizing surfaces of the tail booms are each arranged symmetrically with respect to the respective stem of the tail boom. The stabilizing surfaces of the tail booms are arranged at an angle to one another in such a way that upper edges of the stabilizing surfaces have a smaller spacing than lower edges of the stabilizing surfaces. Each of the stabilizing surfaces has a tilting device for controlling the aircraft.

The concept underlying the present invention consists in advantageously distributing the aerodynamic load acting on the tail booms by symmetrical embodiment of the stabilization surfaces. In particular, the torsional moment acting on the respective stem can be minimized or completely eliminated. This makes it possible to perform control of the aircraft exclusively by means of the tail booms, thereby making it possible to save material in such a way that the weight of the aircraft can be advantageously reduced and the functionality of systems arranged on the aircraft can be optimized or extended.

Advantageous embodiments and further developments will become apparent from the further dependent claims and from the description with reference to the figures.

According to a further development, each tilting device is arranged in such a way that the respective stabilizing surface can be fully tilted. This can facilitate the design of the aircraft since the stem and the stabilizing surface can be formed separately and then connected by means of the tilting device.

According to a further development, each tilting device is arranged in such a way that the respective stabilizing surface is divided into a tiltable control surface and a non-tiltable connecting surface. It is thereby possible to advantageously optimize the aerodynamic properties and stability of the tail boom.

According to a further development, the wing assembly is configured as a monoplane, in particular as a V-shaped monoplane. This is an advantageously simple, reduced-weight embodiment which is made possible by the embodiment according to the invention of the tail booms.

According to a further development, the propulsion device is mounted on the fuselage. This allows an advantageously increased overall stability of the aircraft.

According to a further development, the aircraft has two propulsion devices, which are arranged on the wing assembly so as to correspond to the two tail booms. This makes it possible to improve the functionality of systems mounted on the fuselage since, in this embodiment, they are not hindered by a propulsion device.

According to a further exemplary embodiment, the aircraft has two or more fuselages. This may be of advantage, depending on the payload requirements on the aircraft.

According to another exemplary embodiment, the aircraft has an even number of tail booms. This may be of advantage, depending on the payload requirements on the aircraft.

The above embodiments and further developments can be combined with one another in any way desired, insofar as this is worthwhile. Further possible embodiments, further developments and implementations of the invention also comprise combinations, not explicitly mentioned, of features of the invention which are described above or below in relation to the exemplary embodiments. In particular, a person skilled in the art will also add individual aspects as improvements or supplementary features to the respective basic form of the present invention.

The present invention is explained in greater detail below with reference to the exemplary embodiments indicated in the schematic figures. Here,
- Fig. 1: shows an aircraft according to an exemplary embodiment of the present invention;
- Fig. 2: shows an aircraft according to an exemplary embodiment of the present invention;
- Fig. 3: shows a tail boom of an aircraft according to an exemplary embodiment of the present invention.

The appended figures are intended to impart greater understanding of the embodiments of the invention. They illustrate embodiments and are used to explain principles and concepts of the invention in conjunction with the description. Other embodiments and many of the advantages mentioned will be apparent from viewing the drawings. The elements of the drawings are not necessarily shown to scale relative to one another.

In the figures of the drawing, elements, features and components that are the same, functionally the same and have the same effect are each provided with the same reference signs, unless stated otherwise.

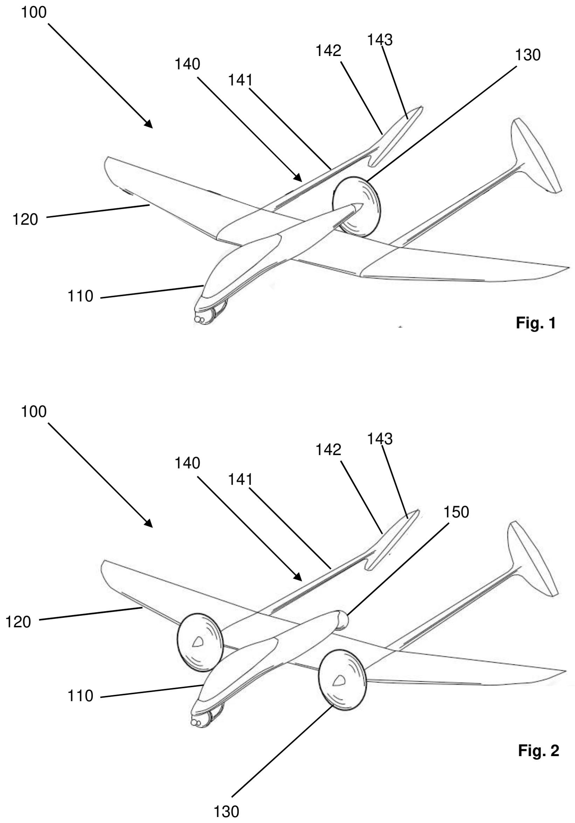

Fig. 1 shows an aircraft 100. The aircraft has a fuselage 110, a wing assembly 120, a propulsion device 130, and two tail booms 140. Each of the tail booms 140 has a stem 141 and a stabilizing surface 142.

The stabilizing surfaces 142 of the tail booms 140 are each arranged symmetrically with respect to the respective stem 141 of the tail boom 140. The stabilizing surfaces 142 of the tail booms 140 are arranged at an angle to one another in such a way that upper edges of the stabilizing surfaces 142 have a smaller spacing than lower edges of the stabilizing surfaces 142. Each of the stabilizing surfaces has a tilting device 143 for controlling the aircraft.

The aircraft 100 can be controlled by actuating the respective tilting devices 143. Actuating the tilting devices 143 symmetrically gives rise to air flows which impart a pitching movement to the aircraft 100. Antisymmetric actuation of the tilting devices 143 causes a movement which has both a rolling and a yawing component. The tail booms 140 can thus fully control the aircraft without the need for other control devices. This enables the wing assembly 120 to be embodied as a V-shaped monoplane, as shown in Fig. 1. Since the tail booms are not connected to one another, it is possible by unilateral actuation of the respective tilting devices to mitigate loads due to asymmetric gusts if these are detected in a timely manner by a corresponding device.

Each tilting device 143 is arranged in such a way that the respective stabilizing surface 142 is divided into a tiltable control surface and a non-tiltable connecting surface. This allows finer adjustment of the aerodynamic properties of the tail booms 140. The tilting devices 143 may also be arranged in such a way that the respective stabilizing surface 142 can be fully tilted, thereby for example making the fabrication of the aircraft 100 easier.

The propulsion device 130 is mounted on the fuselage 110. The alignment of the propulsion device 130 along the central axis of the aircraft 100 supports the stability of the aircraft when it is being controlled by means of the tail booms 140.

Fig. 2 shows an aircraft 100 having essentially the features shown in Fig. 1. The aircraft 100 shown in Fig. 2 has two propulsion devices 130, which are arranged on the wing assembly 120 so as to correspond to the two tail booms 140.

In the embodiment shown in Fig. 2, an active system 150 can be arranged at the rear of the fuselage 110, for example, said system having a free field-of-view as well as accessibility both in flight and on the ground since it is not obstructed by the propulsion devices 130 or the tail booms 140.

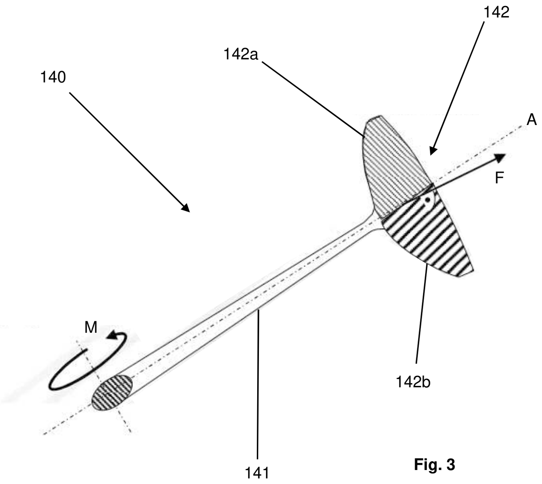

Fig. 3 shows a tail boom 140 according to one exemplary embodiment of the present invention. The tail boom 140 has a stem 141 and a stabilizing surface 142. The stabilizing surface 142 is arranged symmetrically with respect to the stem 141. For the sake of greater clarity, no tilting device is shown in Fig. 3.

As can be seen in Fig. 3, the stabilizing surface 142 is divided into two identical partial surfaces 142a and 142b, which are arranged symmetrically with respect to the elastic axis A of the stem 141. Aerodynamic loading of the stabilizing surface 142 results in a force F which acts on the stabilizing surface perpendicularly to the elastic axis A. The resulting bending moment M acting on the stem 141 is likewise perpendicular to the elastic axis A, for which reason there is no torsional load on the stem 141.

The embodiment of the stem 141, especially as regards material, cross section and wall thickness of the stem, can advantageously be directly matched to this pure bending load.

In the exemplary embodiments in the figures, the aircraft shown each have a single fuselage. However, it is also conceivable that an aircraft according to one exemplary embodiment of the present invention has two or more fuselages. Particularly in the case of unmanned aircraft, this may be an advantageous embodiment, depending on the payload of the aircraft.

The aircraft shown in the figures likewise each have precisely two tail booms. In principle, however, it is possible and, depending on the embodiment, sometimes advantageous to fit an aircraft with an even number of tail booms according to the present invention, e.g. four or six.

### List of reference signs

- 100: aircraft
- 110: fuselage
- 120: wing assembly
- 130: propulsion device
- 140: tail boom
- 141: stem
- 142: stabilizing surface
- 142a: partial surface
- 142b: partial surface
- 143: tilting device
- 150: active system
- A: elastic axis
- F: force
- M: bending moment

## Claims

1. Aircraft (100), having
a fuselage (110);
a wing assembly (120);
a propulsion device (130); and
two tail booms (140), each comprising a stem (141) and a stabilizing surface (142);
wherein the stabilizing surfaces (142) of the tail booms (140) are each arranged symmetrically with respect to the respective stem (141) of the tail boom (140);
wherein the stabilizing surfaces (142) of the tail booms (140) are arranged at an angle to one another in such a way that upper edges of the stabilizing surfaces (142) have a smaller spacing than lower edges of the stabilizing surfaces (142); and
wherein each of the stabilizing surfaces (142) has a tilting device (143) for controlling the aircraft (100).

2. Aircraft (100) according to Claim 1, wherein each tilting device (143) is arranged in such a way that the respective stabilizing surface (142) can be fully tilted.

3. Aircraft (100) according to Claim 1, wherein each tilting device (143) is arranged in such a way that the respective stabilizing surface (142) is divided into a tiltable control surface and a non-tiltable connecting surface.

4. Aircraft (100) according to one of the preceding claims, wherein the wing assembly (120) is configured as a monoplane.

5. Aircraft (100) according to Claim 4, wherein the wing assembly (120) is configured as a V-shaped monoplane.

6. Aircraft (100) according to one of the preceding claims, wherein the propulsion device (130) is mounted on the fuselage (110).

7. Aircraft (100) according to one of Claims 1 to 5, wherein the aircraft (100) has two propulsion devices (130), which are arranged on the wing assembly (120) so as to correspond to the two tail booms (140).

8. Aircraft (100) according to one of the preceding claims, wherein the aircraft (100) has two fuselages (110).

9. Aircraft (100) according to one of the preceding claims, wherein the aircraft (100) has an even number of tail booms (140).
